# FASCICULE DE BREVET EUROPEEN

(11) **EP 3 658 377 B1**
(45) Date de publication et mention de la délivrance du brevet: **18.09.2024**
(21) Numéro de dépôt: 18723870.4
(22) Date de dépôt: 18.05.2018
(51) Int. Cl.: B22F 10/28, B22F 10/368, B22F 10/47, B22F 12/90, B33Y 30/00, B33Y 50/02, B29C 64/153, B29C 64/20, B29C 64/40, B29C 64/393, G01N 29/07, G01N 29/44, B22F 3/105, G01N 29/24, B22F 10/85

(54) **PROCEDE ET DISPOSITIF D'INSPECTION DE TEMPERATURE LORS D'UN PROCEDE DE FABRICATION ADDITIVE**
VERFAHREN UND VORRICHTUNG ZUR TEMPERATURPRÜFUNG BEI EINEM VERFAHREN DER GENERATIVEN FERTIGUNG
METHOD AND DEVICE FOR TEMPERATURE INSPECTION DURING AN ADDITIVE MANUFACTURING PROCESS

(30) Priorité: 28.07.2017 FR 1757195
(43) Date de publication de la demande: 03.06.2020
(73) Titulaire: Commissariat à l'Énergie Atomique et aux Énergies Alternatives, 75015 Paris (FR)
(72) Inventeur: LE BOURDAIS, Florian, Montrouge 92120 (FR); PENOT, Jean-Daniel, 92150 Suresnes (FR)
(74) Mandataire: Atout PI Laplace
(86) Numéro de dépôt international: PCT/EP2018/063049
(87) Numéro de publication internationale: WO 2019/020237

(56) Documents cités:
- US-A1- 2013 309 420
- US-A1- 2016 325 541
- JIA RUIXI ET AL: "Study of ultrasonic thermometry based on ultrasonic time-of-flight measurement", AIP ADVANCES, AMERICAN INSTITUTE OF PHYSICS, 2 HUNTINGTON QUADRANGLE, MELVILLE, NY 11747, vol. 6, no. 3, 7 March 2016 (2016-03-07), XP012205541, DOI: 10.1063/1.4943676

## Description

### Domaine de l'invention

L'invention se situe dans le domaine de la fabrication additive et concerne un procédé et un dispositif permettant d'inspecter la température au cours d'un procédé de fabrication additive, et plus particulièrement d'un procédé de fabrication additive par fusion sur lit de poudre.

### Etat de la Technique

Le terme de fabrication additive (FA) désigne selon la norme NF E 67-001, « l'ensemble des procédés permettant de fabriquer couche par couche par ajout de matière un objet physique à partir d'un objet numérique ». Ce terme regroupe des dizaines d'appellations de technologies de fabrication, classées en sept catégories de procédés selon la norme NF ISO 17296-2 Juin 2015, parmi lesquelles figure la catégorie de fusion sur lit de poudre ayant pour abrégé (PBF) de l'anglais *« Powder Bed Fusion ».*

Les procédés de PBF possèdent le point commun de procéder à une fusion partielle ou totale de poudre statique, la poudre généralement provenant de matériaux métalliques, céramiques ou plastiques.

Les procédés PBF diffèrent selon la nature de la source d'énergie employée pour produire la fusion, qui peut être un laser (procédé dit LMF pour « *Laser Metal Fusion* »), un faisceau d'électrons ou encore une lampe infrarouge pour ne citer que ces exemples.

Longtemps dédiée au prototypage rapide, l'utilisation de la fabrication additive pour la fabrication de pièces fonctionnelles ne cesse de croitre. Ses atouts sont multiples, notamment sa capacité à produire des pièces de haute complexité géométrique inatteignable par d'autres moyens, telles que des structures architecturées, couramment appelées structure « *lattice* » selon l'anglicisme. La plupart du temps, ces pièces construites strate-par-strate sont bâties sur des structures de supports provisoires afin de stabiliser et solidariser les pièces avec le plateau de fabrication. Ces supports sont également conçus pour éviter l'effondrement de métal fondu, notamment lorsqu'une paroi de la pièce possède un angle ou un porte-à-faux important, pour limiter les déformations d'origine thermique et pour évacuer la chaleur issue de l'interaction rayonnement/poudre. Ils sont peu massifs afin d'une part de limiter la consommation de poudre nécessaire à leur réalisation et d'autre part de faciliter leur désolidarisation post-fabrication. Ces supports peuvent prendre diverses formes : structure alvéolaire, pylônes multiples, toile d'araignée, structure radeau dite « *raft* », etc.

Plusieurs verrous technologiques retardent cependant une plus large diffusion des procédés de PBF, notamment pour la production de pièces de haute criticité. L'un des principaux défis concerne le développement de méthodologies de contrôle et d'assurance qualité permettant de garantir la fiabilité des pièces produites. En particulier la connaissance de l'histoire thermique d'une pièce fabriquée en fabrication additive est fondamentale pour la qualité des pièces. Comme tous les procédés de mise en forme thermique (moulage, etc.), le refroidissement est fondamental. Il définit notamment la microstructure du matériau, qui conditionne ses propriétés macroscopiques, dont les propriétés mécaniques. En outre, l'histoire thermique conditionne la présence de contraintes résiduelles. Les contraintes résiduelles (amplitude du champ de contrainte, localisation dans la pièce, ...) sont responsables de l'apparition des fissures, déformations, etc.

Pour assurer l'homogénéité au sein d'un lit de poudre, et la reproductibilité d'une machine à l'autre, il est nécessaire de surveiller la température en différents points, idéalement de la totalité du système (chambre de fabrication, pièce en construction). Cela est d'autant plus important que la fabrication additive est particulièrement opportune pour des petites séries voire des pièces uniques, notamment les pièces personnalisées. Mais contrairement aux chaines de production traditionnelles, la température de fabrication varie pour chaque pièce. Il est donc impératif d'effectuer un suivi de la température à chaque fabrication, avec un contrôle précis au coeur de la matière.

Or, la température au coeur d'une pièce est difficile à prédire en ne connaissant que le cycle de fabrication, car de nombreux paramètres ont une influence sur la thermique, tels la géométrie de la pièce, du ou des supports, la stratégie de balayage, pour ne citer que ces paramètres. Il existe alors le besoin d'un dispositif d'instrumentation prenant en compte les paramètres d'influence.

Quelques solutions existent pour inspecter/contrôler la température lors de procédés de fabrication de pièces. Certaines sont limitées à des mesures en périphérie et ne permettent pas d'accéder au coeur de la matière. Il en est ainsi dans la demande US 2013/309420 A1 qui propose un procédé où l'inspection de la température est réalisée à l'aide d'une canne de mesure verticale comportant une pluralité de thermocouples répartis suivant la hauteur de la canne.

D'autres approches, telle celle d'Ikuo Ihara et al. "Ultrasonic Thermometry for Température Profiling of Heated Materials.", in Advancement in Sensing Technology, SSMI 1, pp. 211-36, sont basées sur l'utilisation d'ultrasons pour contrôler les gradients de température pendant le chauffage des matériaux. Il en est de même dans la demande de brevet US2016/325541 A1 et dans l'article de Jia Ruixi et al. « Study of ultrasonic thermometry based on ultrasonic time-of-flight measurement », AIP Advances, American Institute of Physics, 2 Huntington Quadrangle, Melville, NY 11747, vol. 6, no. 3, 7 mars 2016.

Cependant, les solutions connues bien que produisant des informations pertinentes, restent limitées au contrôle de pièces directement accessibles et non enterrées. Par ailleurs, les méthodes sont opérationnelles sur des géométries de pièces qui sont fixes et n'évoluant pas couche par couche. Enfin, les approches connues font en général l'hypothèse d'un apport de chaleur en régime permanent, contrairement à la fabrication additive sur lit de poudre où l'apport de chaleur est extrêmement rapide, par exemple par le laser.

Ainsi, les moyens de contrôle de température connus s'appliquent à du contrôle superficiel ou très local et ils ne permettent pas d'accéder au coeur de la matière produite. Ceci est d'autant plus important que plusieurs couches sont généralement refondues à chaque passe du faisceau d'énergie, et que les couches enterrées subissent des modifications structurales importantes sous l'effet de forts gradients thermiques, telles que des transformations à l'état solide, la création de champs de contrainte conséquents. Ce manque de contrôle santématière est dû à la difficulté d'accès à une pièce enterrée dans un lit de poudre du même matériau.

Il existe alors le besoin d'une solution appropriée qui pallie les inconvénients des approches connues de manière à inspecter la température de pièces en cours de fabrication lors d'un procédé de fabrication additive sur lit de poudre. La présente invention répond à ce besoin.

### Résumé de l'invention

Un objet de la présente invention concerne un procédé et un dispositif d'inspection de température au cours d'un procédé de fabrication additive par fusion sur lit de poudre.

La présente invention vise à pallier les limites des techniques connues en proposant une mesure volumique par ultrasons de la température dans un lit de poudre et/ou dans des pièces en fabrication.

L'invention trouvera des applications avantageuses dans de nombreux domaines techniques tels que les industries aéronautique, spatiale ou automobile, pour ne citer que ces quelques exemples.

Le principe général de l'invention est basé sur l'analyse de la vitesse de propagation aller-retour (ou temps de vol) d'ondes ultrasonores dans des guides d'ondes qui sont fabriqués simultanément à la fabrication additive d'une ou plusieurs pièces, la comparaison avec des valeurs obtenues par simulation afin d'estimer le champ de température régnant dans le lit de poudre et/ou dans la ou les pièce(s) en cours de réalisation.

Le processus revendiqué est itératif, il procède par comparaisons successives de valeurs de temps de vol entre d'une part des valeurs expérimentales mesurées durant la propagation d'ondes ultrasonores dans des guides d'ondes en cours de construction, et d'autre part des valeurs issues de simulations avec un modèle de propagation ultrasonore dans un matériau soumis à un champ de température. A chaque itération, il est effectué une mise à jour du champ de température du modèle. Le modèle, préférentiellement numérique, est une représentation simplifiée du système physique réel, sous forme d'un système simulé. Il comporte un modèle de propagation ultrasonore, un modèle de comportement thermique du système simulé au sein d'une géométrie similaire à celle du système réel et qui est évolutive à chaque couche de sa fabrication, et un modèle élastodynamique du comportement d'ondes élastiques au sein de la zone inspectée.

Avantageusement, le procédé de l'invention permet une mesure adaptative qui prend en compte l'apport de chaleur par la source d'activation, ainsi que le changement de géométrie d'une pièce au fur et à mesure de sa fabrication couche par couche.

Pour obtenir les résultats recherchés, il est proposé un procédé pour inspecter la température au cours d'une fabrication additive de pièce par fusion sur lit de poudre selon la revendication 1

Dans une implémentation préférentielle :
- le modèle de simulation est un modèle numérique comprenant au moins une description géométrique de la zone inspectée à la couche 'n', un modèle de comportement thermique et un modèle élastodynamique du comportement d'ondes élastiques au sein de la zone inspectée.

Selon des modes de réalisation :
- la description géométrique de la zone inspectée comprend une description de l'ensemble des éléments traversés par le faisceau ultrasonore dont au moins une description dudit au moins un guide d'ondes et de ladite au moins une pièce en cours de fabrication. ;
- le modèle élastodynamique comprend des équations dont la résolution est faite de manière semi-analytique ;
- avant de répéter les étapes pour une couche donnée 'n', le procédé comprend une étape pour déterminer si il y a eu un balayage par la source d'activation sur la couche 'n' dans la zone dudit au moins un guide d'ondes ;
- si il y a eu un balayage par la source d'activation sur la couche 'n' dans la zone dudit au moins un guide d'ondes, le procédé comprend une étape de mettre à jour dans le modèle de simulation la géométrie de la zone inspectée avec l'ajout d'une nouvelle couche `n+1 ' ;
- si il y a eu un balayage par la source d'activation sur la couche 'n' dans la zone dudit au moins un guide d'ondes, le procédé comprend une étape de mettre à jour dans le modèle thermique des paramètres de température en surface dudit au moins un guide d'ondes ;
- la mise à jour du modèle de simulation prend en compte la température en surface dudit au moins un guide d'ondes, ladite température étant obtenue par des moyens de mesure de température sans contact;
- la mise à jour du modèle de simulation prend en compte la température du plateau de construction du système de fabrication, ladite température étant obtenue par des moyens de mesure de température non ultrasonores ;
- avant les étapes de mesurer le temps de vol pour une couche 'n', le procédé comprend une étape de déterminer que les signaux produits par le faisceau ultrasonore sont exploitables à ladite couche 'n' pour effectuer une mesure de temps de vol ;
- le procédé comprend une étape d'initialisation du modèle de simulation consistant à initialiser le modèle à la couche 'n' ;
- l'initialisation du modèle à la couche 'n' consiste à initialiser la géométrie de la zone inspectée et les paramètres du champ de température.

L'invention couvre aussi un dispositif pour inspecter la température au cours de la fabrication d'une pièce selon la revendication 13.

Selon des variantes d'implémentation :
- ledit dispositif comprend au moins un guide d'ondes isolé de ladite au moins une pièce en cours de fabrication ;
- ledit dispositif comprend au moins un guide d'ondes solidaire de ladite au moins une pièce en cours de fabrication ;
- ledit dispositif comprend des moyens sans contact de type pyromètre ou caméra thermique pour mesurer la température en surface dudit au moins un guide d'ondes;
- ledit dispositif comprend des moyens non ultrasonores de type thermocouple pour mesurer la température du plateau de construction du système de fabrication;
- un faisceau ultrasonore est émis dans ledit au moins un guide d'ondes par au moins un traducteur piézoélectrique, ledit au moins un traducteur étant relié à un système d'acquisition électronique apte à envoyer des pulses d'excitation vers ledit au moins un traducteur ;
- le système d'acquisition électronique est apte à numériser les signaux analogiques reçus dudit au moins un traducteur pour générer une valeur de temps de vol, comparer la valeur de temps de vol avec une valeur de propagation d'un faisceau ultrasonore dans un champ de température obtenue par simulation, la simulation s'appuyant sur un modèle représentatif du système de fabrication additive, mettre à jour le modèle de simulation et générer une estimation du champ de température régnant dans ledit au moins un guide d'ondes à partir du résultat des comparaisons.

L'invention couvre aussi un système de fabrication additive de pièce par fusion sur lit de poudre selon la revendication 20.

### Description des figures

Différents aspects et avantages de l'invention vont apparaitre en appui de la description d'un mode préféré d'implémentation de l'invention mais non limitatif, avec référence aux figures ci-dessous :
La figure 1 est une représentation simplifiée d'un système de fabrication additive permettant d'implémenter et opérer le dispositif de l'invention;
La figure 2 illustre sur une vue en coupe, un premier mode de réalisation du dispositif de l'invention;
Les figures 3a à 3c illustrent sur une vue en coupe, à différentes étapes de la fabrication additive d'une pièce, la mise en oeuvre du procédé de l'invention ;
La figure 4 illustre un enchainement des étapes générales du procédé de contrôle de température selon un mode de réalisation de l'invention;
La figure 5 illustre un enchainement détaillé des étapes de la figure 4.

### Description détaillée de l'invention

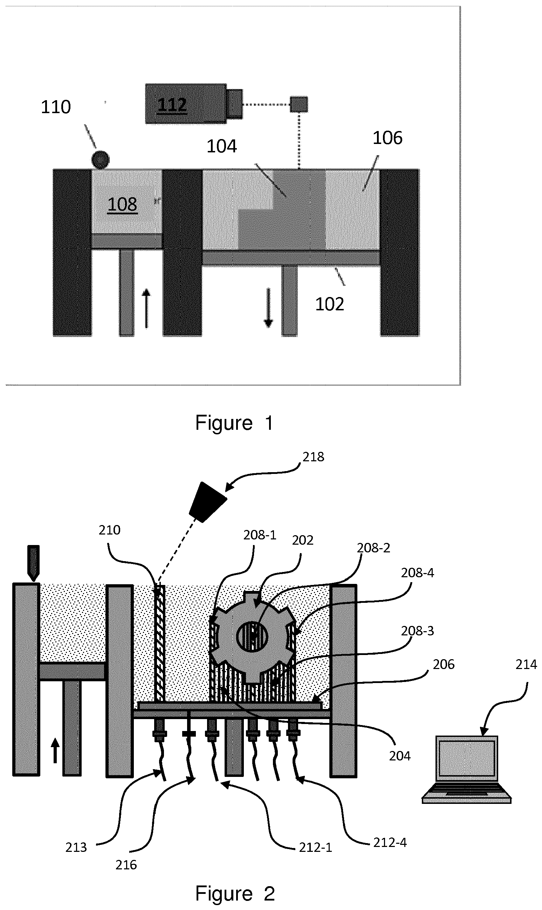

La figure 1 montre un système connu de fabrication additive (100) permettant d'opérer le procédé de l'invention. Le système comprend un plateau de construction (102) sur lequel une ou plusieurs pièces (104) sont fabriquées selon un procédé de fabrication additive par fusion sur un lit de poudre (106), famille de procédé dans son acceptation la plus large incluant le frittage. Le système comprend un réservoir de poudre (108) et un système d'étalement de poudre (110) qui permet d'amener une couche de poudre du réservoir vers le lit de poudre (106) où sous l'effet d'une source de chaleur (112), la fusion locale de la poudre opère pour produire une couche de la ou des pièces à fabriquer. Le processus se répète couche par couche jusqu'à l'obtention de la ou des pièces finales. Il n'est pas décrit plus en détail le procédé complet, et l'homme du métier pourra se reporter à la nombreuse littérature sur les procédés de fabrication additive et les variantes de réalisation basées sur ce même principe.

La figure 2 montre sur une vue en coupe, un système de fabrication additive selon un premier mode de réalisation de l'invention. Il est à noter que les éléments identiques entre les figures portent les mêmes références. Pour des raisons de simplification de la description mais n'étant en rien limitatif, la figure montre une seule pièce arrivée au terme de sa fabrication selon un procédé de fabrication additive par fusion sur lit de poudre par laser. L'homme du métier étendra les principes décrits aux cas de fabrication additive d'une pluralité de pièces pouvant être de taille et forme identiques ou variables, ayant des géométries simples ou complexes. Dans l'exemple choisi, la pièce (202) est fabriquée sur une structure support provisoire (204) permettant notamment de la stabiliser sur un plateau de construction (206). Des guides d'ondes (208-1 à 4) sont insérés dans la structure support et construits simultanément.

Le principe général du procédé de l'invention consiste, à partir d'une mesure du temps de vol d'une onde ultrasonore dans un (ou plusieurs) guide d'ondes qui est fabriqué simultanément à la fabrication d'une pièce, et d'analyses comparatives itératives avec des résultats obtenus par un modèle de simulation numérique, de déterminer le champ de température dans le (ou les) guide d'ondes, et plus largement dans la pièce et/ou le lit de poudre. Le ou les guides d'ondes, qui peuvent être désignés dans la description par l'acronyme GO, sont fabriqués par fusion de la poudre, tout comme les supports provisoires et les pièces. Ils sont ancrés sur la face supérieure du plateau de construction (206). Préférentiellement, la fabrication des GO est réalisée avec une stratégie de balayage similaire ou identique à celle des pièces attenantes, notamment en termes de puissance laser, vitesse laser et trajectoires. Directement fabriqués sur le plateau de construction, les GO peuvent optionnellement présenter une légère réduction de section au niveau de leur ancrage avec le plateau et, le cas échéant, avec la pièce, afin de faciliter leur désolidarisation en fin de cycle. L'homme du métier comprend que la réduction de section doit être limitée de sorte à ne pas induire d'artefact sur les faisceaux ultrasonores émis et réfléchis.

Les GO ont de manière préférentielle une géométrie simple, pleine et axiale, sans bifurcation tout au long de la zone de contrôle. Leur section est prédéfinie pour permettre le passage d'un faisceau ultrasonore, tout en minimisant la consommation de poudre et de temps de procédé afin de la réaliser. Dans un mode de réalisation préférentielle, les guides d'ondes sont construits comme des cylindres érigés simultanément avec la pièce (ou le lot de pièces) et sa structure support, couche après couche. Dans différents modes de réalisation, les GO peuvent présenter d'autres géométries de sections comme des bases ovales, carrées, triangulaires, rectangulaires, etc.

La section minimale d'un GO est choisie en fonction du matériau contrôlé et de l'onde ultrasonore utilisée pour le contrôle, singulièrement son type et sa fréquence. Aussi, le diamètre d'un GO est toujours choisi supérieur au rapport « c/f », et de manière préférentielle supérieur à « 3*c/f », où « c » désigne la vitesse de propagation de l'onde ultrasonore dans le matériau contrôlé et « f » la fréquence principale de l'onde ultrasonore.

A titre d'exemple, pour le contrôle de température pour un lit de poudre en acier avec une onde transversale de 10 MHz, la vitesse de propagation des ondes transversales dans l'acier étant de 3230 m/s, alors le diamètre d'un GO cylindrique doit excéder « c/f=323 µm », et de manière préférentielle doit excéder « 3*c/f=969 µm ». La dimension préférentielle minimale d'un GO est de l'ordre du millimètre.

Revenant à la figure 2, des traducteurs ultrasonores (212-1 à 212-4, 213) solidaires du plateau de construction sont disposés sous le plateau de manière à pouvoir émettre chacun un faisceau acoustique dans un GO fabriqué en son regard. Ainsi, sur l'exemple, un traducteur (212-1 à 212-4, 213) est positionné respectivement sous le plateau à l'endroit de la fabrication de chaque GO (208-1 à 208-4, 210).

Selon l'invention, le traducteur est un traducteur piézoélectrique utilisé en mode émission-réception confondues, dite *« pulse-echo »* selon l'anglicisme reconnu. Chaque guide d'onde permet d'acheminer un signal ultrasonore au coeur du lit de poudre. Le faisceau se propage dans le GO parallèlement à l'axe du GO. Une implémentation préférentielle est celle où les guides d'ondes sont orthogonaux au plateau de construction, c'est-à-dire verticaux dans le lit de poudre, afin de permettre que la majeure partie du signal se réfléchissant sur la face supérieure se dirige en écho vers le récepteur.

Le traducteur qui est solidaire de la face arrière du plateau de construction est monté de façon à assurer la liaison acoustique entre le traducteur et le plateau. Ceci peut être obtenu par exemple par l'emploi d'une couche d'agent de couplage (graisse, huile, colle cellulosique, gels spéciaux) qui peut avoir une épaisseur de l'ordre d'un à plusieurs dixièmes de millimètre. Le traducteur et le couplant sont sélectionnés pour résister à la température maximale du plateau (qui est fonction du matériau fusionné et de la stratégie de fabrication, typiquement de l'ordre de quelques dizaines de °C).

Le diamètre d'un GO est défini de manière préférentielle comme étant égal ou légèrement supérieur (e.g. +10%) à la dimension de la pastille piézoélectrique du traducteur. Les traducteurs usuels à la date de dépôt de la demande de brevet présentant des dimensions de quelques millimètres, généralement une fraction de pouce, les GO ont par exemple un diamètre de l'ordre de 1,6 mm pour un capteur d'ouverture 1/16 de pouce, de l'ordre de 3,4 mm pour un capteur d'ouverture 1/8 de pouce, ou encore de l'ordre de 6,4 mm pour un capteur d'ouverture % de pouce.

En vue de minimiser et le temps et la poudre nécessaires à leur fabrication, de manière préférentielle le diamètre des GO pour des dispositifs de fabrication additive usuels n'excède pas quelques centimètres.

L'homme du métier peut déduire le dimensionnement des GO présentant des géométries de sections différentes selon les mêmes principes, en remplaçant le diamètre par la plus petite dimension de la section, comme le plus petit axe d'une ellipse ou le plus petit côté d'un rectangle par exemple.

Avantageusement, pour la mesure de température selon le principe de l'invention, deux types de guides d'ondes peuvent être fabriqués simultanément à la fabrication de pièces, chaque type de GO ayant un emplacement et une fonctionnalité différents. Ainsi, il peut être fabriqué:
- des GO-témoins ; et
- des GO-supports.

Sur l'exemple choisi de la figure 2, cinq guides d'ondes ultrasonores sont illustrés dont un GO-témoin (210) et quatre GO-supports (208-1 à 208-4) sans que cela soit limitatif, le nombre de GO-témoins et de GO-supports pouvant varier.

Les GO-témoins ne présentent aucun contact avec les pièces en fabrication, ils sont isolés des pièces et sont insérés dans des emplacements libres de pièces, comme témoins de conformité.

Dans une implémentation avantageuse, un GO-témoin est localisé au voisinage d'une pièce, ou de chaque pièce critique. Un GO-témoin peut être disposé dans une proximité d'une pièce allant du millimètre à quelques centimètres afin d'accroitre la représentativité du contrôle. Dans d'autres implémentations, notamment dans le cas de pièces de grandes dimensions et/ou de haute criticité, une pluralité de GO-témoins peut être placée au voisinage d'une pièce, par exemple sur tout son pourtour.

Un GO-témoin peut permettre d'évaluer l'homogénéité de la fabrication au sein du lit de poudre. En effet, les lits de poudre connaissent des hétérogénéités de température. La comparaison des signaux ultrasonores des différents GO-témoins, en particulier la comparaison des valeurs estimées des champs de température permet de qualifier l'homogénéité sur le plateau. Dans une implémentation avantageuse, une pluralité de GO-témoins est répartie au sein du lit de poudre, de manière intercalée entre les différentes pièces à fabriquer. Le nombre de GO-témoins peut varier et aller de au moins un à plusieurs dizaines. Un GO-témoin diffère d'une simple pièce de contrôle en ce sens que son positionnement est adapté, voire optimisé, pour le contrôle au voisinage d'une pièce ou de l'ensemble de la surface du plateau. L'ancrage sur le plateau des GO-témoins ne ramène pas un inconvénient en ce sens que les GO-témoins peuvent être sacrificiels, contrairement à des pièces témoins.

Les GO-supports sont intégrés aux supports provisoires de pièces en fabrication. Un GO-support est solidaire d'une pièce, et selon son emplacement sur la pièce, il peut être solidaire de la pièce soit dès la réalisation des premières couches de la pièce, soit ultérieurement au cours de la fabrication. Les guides d'ondes solidaires d'une pièce en acheminant un faisceau ultrasonore servent à inspecter la température au coeur de la pièce. Ils diffèrent des supports provisoires en ce qu'ils ont des sections plus grandes que celles des éléments usuels. La section des GO-supports est choisie de dimension suffisante pour permettre le passage du faisceau ultrasonore, tout en étant minimisée pour d'une part éviter une consommation excessive de poudre pour les réaliser et d'autre part éviter une trop forte concentration de contraintes.

Avantageusement, des GO-support seront disposés de manière à acheminer un faisceau ultrasonore dans des zones critiques de la pièce. Il peut notamment s'agir de régions à fort gradient thermique. Un GO-support intégré à la structure support présente avantageusement une symétrie ou une périodicité pour limiter l'asymétrie des déformations à l'échelle de la pièce. Dans un mode de réalisation, des GO-support peuvent être présents sur l'ensemble de la zone de supportage de la pièce, séparés par « n » supports usuels, « n » étant constant entre chaque GO-support.

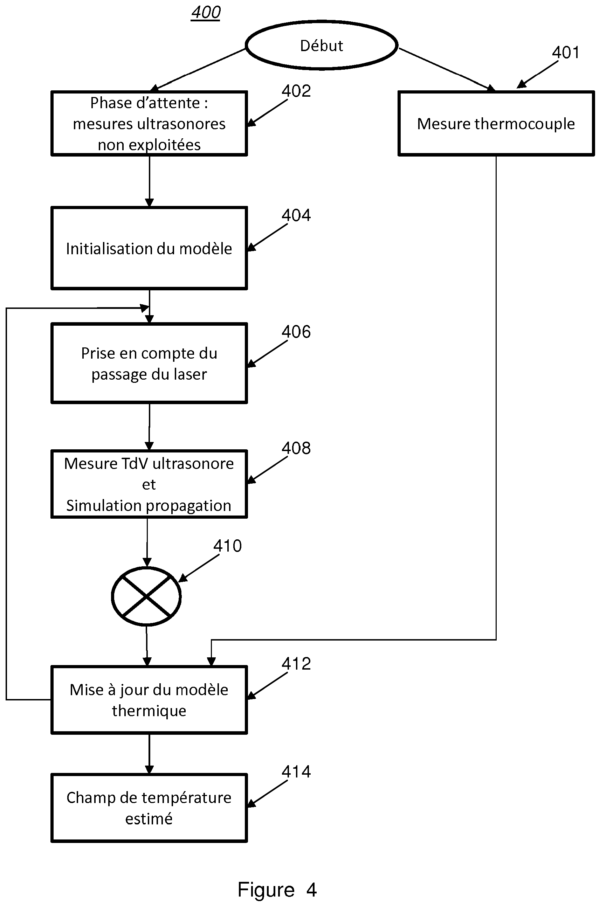

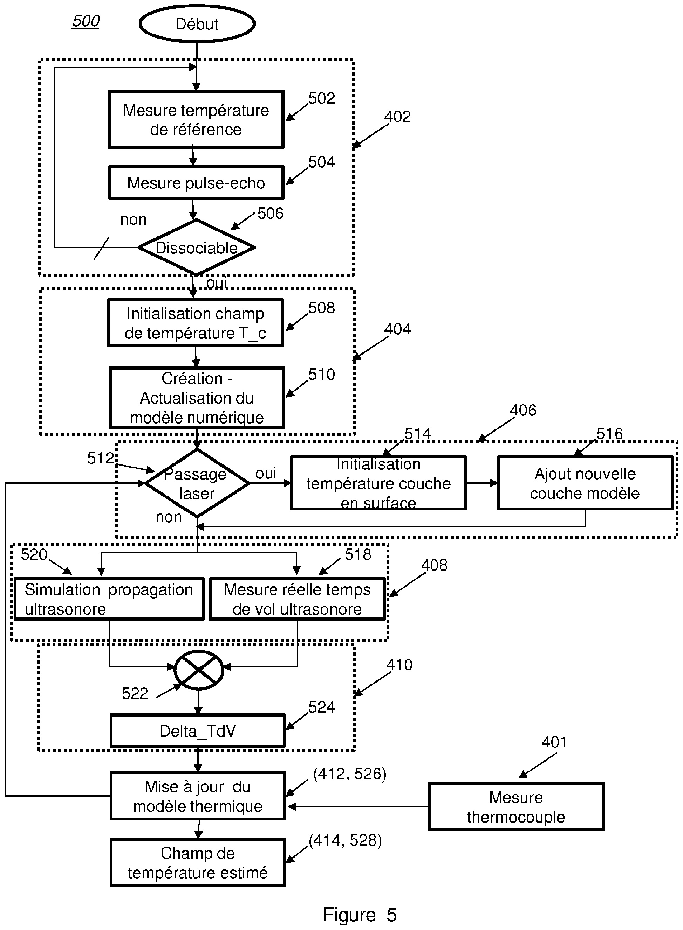

Revenant à la figure 2, le ou les traducteurs sont reliés à un système d'acquisition électronique (214) qui permet la numérisation des signaux analogiques reçus des traducteurs. Le système d'acquisition électronique envoie à intervalles de temps fixés des pulses d'excitation vers les traducteurs et réceptionne tout signal réfléchi par un GO dans un intervalle de temps inférieur à l'intervalle entre les pulses. Le signal reçu est traité et croisé avec les résultats de simulation selon le procédé décrit en référence aux figures 4 et 5 pour permettre de déterminer le champ de température dans le volume du GO correspondant au signal analysé.

Le système de fabrication additive de l'invention comprend de plus au moins un thermocouple (216) permettant de mesurer la température du plateau de construction (206).

Dans un mode de réalisation, le système peut aussi comprendre un pyromètre (218) ou une caméra thermique permettant de mesurer la température au sommet d'un guide d'onde.

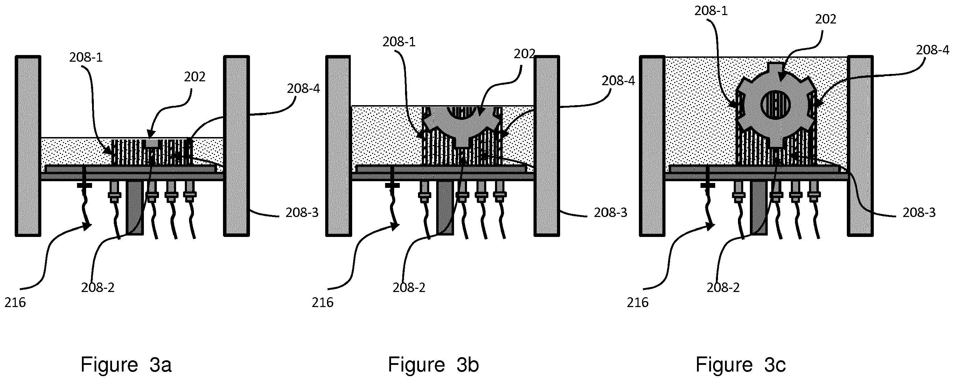

Les figures 3a à 3c montrent sur une vue en coupe, à différents stades de la fabrication d'une pièce (202), la fabrication simultanée de quatre guides d'ondes ultrasonores (208-1 à 208-4) permettant d'opérer le procédé de l'invention. Sur la figure 3a qui illustre un stade précoce de la fabrication, un seul guide d'onde (208-2) atteint la pièce, et trois guides d'ondes (208-1, 208-3, 208-4) qui sont aussi fabriqués simultanément ne l'atteignent pas. A ce stade de fabrication, une mesure de température selon le procédé de l'invention permet par le guide d'onde solidaire de la pièce (208-2) d'estimer le champ de température pour le volume déjà fabriqué de la pièce et par les guides d'onde isolés de la pièce (208-1, 208-3, 208-4) d'estimer le champ de température dans le lit de poudre.

La figure 3b montre une étape intermédiaire de la fabrication de la pièce où à ce stade, deux guides d'ondes (208-2, 208-3) atteignent la pièce et peuvent être utilisés comme GO-support pour renseigner sur le champ de température au niveau de la pièce. Les deux autres guides d'ondes (208-1, 208-4) n'atteignant pas encore la pièce, ils peuvent toujours être utilisés pour renseigner sur le champ de température dans le lit de poudre.

La figure 3c illustre l'étape finale où la pièce est entièrement fabriquée et où les quatre guides d'ondes (208-1 à 208-4) atteignent la pièce, permettant de les utiliser pour renseigner sur le champ de température au coeur de la pièce.

L'exemple de la figure 3 est simplifié, mais ne limite pas les variantes de réalisation possible où des guides d'onde de type GO-témoins (non illustrés), isolés et indépendants de toute pièce peuvent aussi être fabriqués simultanément (comme le GO-témoin 210 sur la figure 2).

Ainsi, avantageusement, au cours d'un même cycle de fabrication additive sur lit de poudre, le procédé de l'invention permet de combiner un contrôle de température du lit de poudre de manière concomitante à un contrôle de température au coeur d'une ou plusieurs pièces en fabrication.

La figure 4 illustre un enchainement (400) des étapes générales du procédé d'inspection de température selon un mode de réalisation de l'invention. Le procédé débute simultanément avec le début de la fabrication d'une pièce. Des mesures de la température dans le plateau de fabrication sont initiées (401) au moyen du thermocouple, ainsi que des mesures ultrasonores (402) pendant une phase préliminaire d'attente tant que le signal n'est pas exploitable (où les échos se mélangent et ne sont pas séparables temporellement). Les mesures par le thermocouple se poursuivent en continu durant la totalité de la fabrication, et les valeurs mesurées sont prises en compte pour la mise à jour du modèle thermique (412).

Les mesures ultrasonores (402) consistent à envoyer un signal en mode « pulse-echo » (émetteur-récepteur confondus) dans les guides d'ondes et à déterminer dès lors que la mesure d'un temps de vol devient possible, c'est-à-dire dès lors qu'il est possible de dissocier l'écho de fond (ou rebond) correspondant à la réflexion du faisceau ultrasonore sur le haut du guide d'onde dans lequel le signal est envoyé. Ainsi, il est possible que le procédé de fabrication additive ait opéré plusieurs couches avant d'obtenir des mesures qui deviennent exploitables pour le procédé d'inspection.

Dès que des mesures de temps de vol peuvent être exploitées, le procédé initialise le modèle de simulation numérique (404). Le modèle est une représentation simplifiée du système physique réel, sous forme d'un système simulé. Le système simulé est composé à minima des éléments solides non granulaires parcourus par l'onde ultrasonore (le guide d'onde, la région du plateau située entre le guide d'onde et le traducteur en son regard), voire le cas échéant de la pièce (pour le cas des GO-support).

De manière préférentielle, la représentation simplifiée inclut :
(1) La géométrie de la région d'intérêt (ROI) ou zone inspectée à une couche 'n', qui est extraite de fichiers CAO dits « découpés » et déjà communiqués à la machine pour les besoins de la fabrication couche à couche. De manière préférentielle, la description géométrique de la zone inspectée comprend une description de l'ensemble des éléments traversés par le faisceau ultrasonore dont au moins une description dudit au moins un guide d'ondes et de ladite au moins une pièce en cours de fabrication.
(2) Le comportement thermique du système, c'est-à-dire la distribution et la propagation au cours du temps de la chaleur au sein de la géométrie considérée/simulée. Le modèle de comportement thermique peut être analytique ou numérique.

Un modèle de comportement thermique analytique est basé sur l'équation de la chaleur (ou équation de diffusion bien connue de l'homme du métier), appliquée à la géométrie, généralement aux moyens de séries et de fonctions mathématiques (Fourier, Green, Kirchhoff...). Ce type de modèle analytique est en général réservé aux géométries simples, par exemple pour les GO-témoins.

Un modèle de comportement thermique numérique, 2D ou 3D, consiste à décomposer le système en plusieurs milliers de mailles virtuelles, l'équation de la chaleur étant alors appliquée à chacune d'entre elles. Les systèmes d'équations sont alors résolus via une méthode mathématique numérique (par éléments finis FEM, par différences finies FDM ou par éléments de frontière BEM) ce qui permet d'avoir la distribution de la température dans la structure. Ce type de modèles numériques maillés, même si leurs durées de calcul sont supérieures aux modèles analytiques, est préféré dès lors que l'on souhaite obtenir des cartes de température sur des structures complexes.

L'homme du métier considérera que pour ces deux modèles, le choix des conditions aux limites appliquées au modèle thermique est important. Les conditions aux limites décrivent le comportement du système concernant l'échange de chaleur avec le milieu qui entoure ce système. Différentes possibilités existent : une température fixée au bord du modèle, un flux de chaleur fixé, un flux de chaleur fonction de l'écart de température, ou des conditions mixtes.
(3) Le comportement des ondes élastiques au sein de la ROI. Le modèle élastodynamique décrit l'effet d'une perturbation mécanique au cours du temps, en fonction du champ de température régnant dans le milieu. Le comportement de la matière permet de propager des ondes élastiques dont la vitesse dépend de la température locale à la géométrie. Le modèle élastodynamique repose sur plusieurs équations qui doivent être vérifiées de manière conjointe et qui changent en fonction du temps. La méthode de résolution des équations du modèle élastodynamique peut être semi-analytique, c'est-à-dire basée sur une approche connue de « lancer de rayon », à l'instar du logiciel commercial CIVA du déposant, ou être par éléments finis, s'appuyant sur une discrétisation du milieu de propagation sous la forme d'un maillage, non-nécessairement régulier, de la géométrie.

Revenant à la figure 4, l'initialisation du modèle numérique (404) prend en compte des données thermiques qui caractérisent le flux de chaleur dans la matière dans laquelle est fabriquée la pièce, ainsi que les conditions aux limites (sur le bord du modèle). Par ailleurs, le modèle de simulation est initialisé à l'aide des propriétés élastiques de la matière solide produite par le procédé de fabrication ainsi que par la connaissance de sa dépendance à la température, concrètement la vitesse de propagation dans cette matière à différentes températures.

Après l'initialisation, le procédé permet de déterminer (406) si le laser vient de balayer le guide d'onde considéré afin de prendre en compte dans le modèle numérique un apport de chaleur supplémentaire au sommet du guide d'onde.

Le procédé poursuit à l'étape suivante (408) pour obtenir des valeurs réelles et simulées. Il permet d'une part de faire une mesure ultrasonore de temps de vol sur le système réel et d'autre part de simuler une propagation ultrasonore avec un modèle de simulation numérique. Puis, le procédé permet de comparer (410) les écarts entre les valeurs obtenues par les mesures réelles et par la simulation. Le résultat de la comparaison permet de mettre à jour le modèle de simulation (412) et d'estimer le champ de température quand les différences entre simulé et mesuré deviennent inférieures à un seuil prédéfini.

Avantageusement, le procédé de l'invention permet de faire évoluer le modèle de simulation au cours d'une séquence de fabrication d'une pièce. Le modèle de simulation décrit à l'aide de la géométrie, le champ de température dans le guide d'onde à un moment donné. La géométrie d'une pièce est déterminée en fonction de la dernière couche complétée du guide d'onde. Avantageusement, la mise à jour du modèle tient compte du passage du laser.

Si le laser est passé au-dessus d'un guide d'onde, le procédé considère que l'ajout de couche se fait quasi instantanément (de l'ordre de quelques secondes), et la mise à jour de la géométrie se fait alors avec une couche supplémentaire. Lors de la mise à jour, la température dans le guide d'onde à l'instant avant la mise à jour est connue, le procédé utilise le même champ de température, qui est supposé invariant entre les deux instants de temps qui encadrent le passage du laser. Une fois la couche supplémentaire ajoutée à la géométrie du modèle, la valeur du champ de température dans le modèle précédent est copié vers la nouvelle géométrie pour toutes les couches déjà existantes dans le modèle précédent. Une valeur moyenne de température dans la nouvelle couche est alors déterminée en utilisant l'écart des données de mesures de temps de vol constaté à l'étape de comparaison (410) et par la connaissance des propriétés de la matière.

S'il n'y a pas eu de passage de laser, la géométrie de la pièce ne change pas. Pour la mise à jour du modèle de simulation en l'absence d'un apport de chaleur par le laser, le modèle considère que la chaleur s'écoule par le support de la machine de fabrication. Ainsi, la connaissance de la température au niveau du support (401) permet d'estimer le flux de chaleur à l'aide des propriétés thermiques et donc estimer l'évolution dans le temps de la température dans toute la géométrie. La valeur de la température est mise à jour avec l'écart de temps de vol constaté sur la mesure expérimentale. Si l'écart est nul, la correction apportée à cette étape est nulle. L'hypothèse prise est que seul le haut du guide d'onde refroidit suite à cette différence de température. Ceci permet de changer la valeur de la température au bout du guide d'ondes de manière à ce que le modèle donne après correction exactement le même temps de vol que celui mesuré expérimentalement.

Après la mise à jour du modèle (412), le procédé reboucle à l'étape de détermination du passage du laser (406) pour itérer sur de nouvelles mesures (réelles et simulées) du temps de vol. Ainsi à chaque itération de la mise à jour du modèle, le procédé permet de fournir (414) en temps réel, une estimation du champ de température soit du lit de poudre via un guide d'onde témoin, soit au coeur de la pièce via un guide d'onde support.

La figure 5 illustre un enchainement détaillé des étapes de la figure 4. Durant l'étape initiale (402) simultanément au lancement d'une séquence de fabrication de pièces, il est effectué une mesure de la température de référence du support (502). Des ondes ultrasonores sont envoyées en mode « pulse-echo » (504) dans les guides d'ondes en cours de fabrication tant que les mesures ne sont pas exploitables. Quand les signaux ultrasonores sont dissociables (506), le procédé poursuit à l'étape suivante (404) pour initialiser le modèle et le champ de température.

Selon des modes de réalisation, l'initialisation (508) du champ thermique (T_omega_c) peut être choisie sur la base d'un des critères suivants :
- soit T_omega_c = constante, c'est-à-dire que la température dans l'ensemble du guide d'onde est prise comme étant constante, par exemple égale à la température du support Te qui est mesurée par le thermocouple.
- soit T_omega_c = estimé, c'est-à-dire que la température du guide d'onde est celle donnée par un modèle de simulation thermique seul.
- soit T_omega_c = T_s, c'est-à-dire que la température du guide d'onde est la température de surface, mesurée à l'aide d'un pyromètre ou par tout autre méthode de mesure de température de surface.

Une hypothèse supplémentaire peut être prise en compte pour le profil du champ de température par l'adjonction d'une fonction issue d'un modèle semi-analytique (fonction linéaire, exponentielle, ...), ce qui permet à partir de la seule mesure de surface de prédire l'allure du champ de température dans tout le guide d'onde.

L'initialisation (510) de la géométrie du modèle, est prise à la géométrie du guide d'onde à la couche 'n' à laquelle le procédé se trouve à ce stade. Ainsi par exemple, si le laser a fait 5 passages et a fondu 5 couches, la hauteur du guide d'onde à l'étape d'initialisation est prise égales à 5 couches.

L'étape suivante du procédé consiste à déterminer si le laser (ou toute autre source de chaleur) vient de passer (512), c'est-à-dire vient de balayer le guide d'onde considéré. Cette information est disponible et fournie par le système de pilotage de la fabrication, dit de « FAO » (fabrication assistée par ordinateur). Si oui, le procédé permet d'actualiser la température de la couche en surface (514), en ajoutant au modèle thermique un apport de chaleur au sommet du guide d'onde (516), créant une nouvelle couche en surface. Puis le procédé passe à l'étape suivante (408). Une façon alternative de prendre en compte cet apport de chaleur est de mesurer la température au sommet du guide d'onde considéré par un dispositif additionnel prévu à cet effet (tel un pyromètre) et d'introduire le résultat de cette mesure dans le modèle thermique.

S'il est déterminé que le laser ne vient pas de passer, le procédé poursuit directement à l'étape suivante (408) sans ajout d'une nouvelle couche dans le modèle thermique.

L'étape suivante de mesure de temps de vol (408) consiste d'une part en une mesure (518) du temps de vol du faisceau ultrasonore dans le système réel, et d'autre part en une simulation (520) de la propagation ultrasonore dans le système tel que simulé. La valeur (520) produite par le modèle de simulation prend en compte la géométrie du système à la dernière couche avec le champ de température correspondant.

A l'étape suivante (410), le procédé permet de comparer (522) les deux valeurs de temps de vol, valeur réelle et valeur simulée, et de calculer (524) l'écart existant entre les valeurs. Avantageusement, le procédé permet de prendre en compte l'écart qui est calculé, en ajustant le profil thermique simulé (526), afin de se rapprocher du temps de vol qui est mesuré. Par exemple, si le temps de vol mesuré dans le guide d'onde est inférieur au temps de vol simulé et que la vitesse de propagation diminue avec la température, ce qui est le cas pour l'acier, le procédé considère que la température réelle moyenne est supérieure à la température moyenne du modèle. Une action corrective est alors appliquée à la température moyenne du modèle par une augmentation de température en proportion à l'écart mesuré.

En pratique, de manière préférentielle, le procédé permet de choisir dans quelle région du modèle, la correction liée à l'écart de température mesuré par le modèle doit être appliquée. Étant donné que la seule source de chaleur est le laser, la correction est appliquée sur le modèle à l'endroit proche de la surface, par exemple sur la première couche du modèle ou en moyenne sur plusieurs couches près du laser.

Par cette étape de comparaison et mise à jour du modèle, le profil de température proposé par le modèle est amélioré, affiné, et tend à se rapprocher du champ de température réel régnant dans la pièce en fabrication en considérant que les conditions thermiques du procédé sont bien modélisées. Le champ de température constitue alors l'estimation de la température du guide d'onde (528).

Le procédé peut itérer sur les étapes 512 à 526 avec le profil de température simulé mis à jour. Avantageusement, l'itération permet de se rapprocher au plus près du profil de température réel, qui évolue en fonction du temps. L'itération peut être poursuivie en continu jusqu'à la fin de la séquence de fabrication, voire au-delà si une phase de refroidissement est suivie lors du processus de fabrication.

Par ailleurs, avantageusement après la fabrication simultanée d'un lot de pièces et de guides d'ondes, ces derniers peuvent être prélevés pour des analyses complémentaires, telles que des caractérisations métallurgiques ou des essais mécaniques (après usinage ou non), leur proximité avec les pièces dans le lit de poudre les rendant fort représentatifs de celles-ci.

La présente description illustre une implémentation préférentielle de l'invention, mais n'est pas limitative. Ainsi, bien que le procédé soit décrit pour mesurer une température, il peut être utilisé pour estimer un apport de chaleur/calories transférée(s) par le laser au matériau avec pour intérêt de s'assurer que le laser délivre toujours la même puissance au cours de la fabrication, ou entre deux endroits du lit de poudre. L'homme du métier pourra suivant les mêmes principes, utiliser les mesures pour asservir le procédé, et mettre en oeuvre une boucle de rétroaction sur la fabrication de la pièce. Par ailleurs, bien que la présente invention concerne de manière préférentielle les matériaux métalliques, elle peut être appliquée à d'autres matériaux suffisamment propagateurs d'ondes ultrasonores aux fréquences d'intérêt, comme certaines céramiques. Enfin, l'invention a été décrite pour un procédé de fabrication additive par fusion de poudre par laser, cependant elle peut être mise en oeuvre avec d'autres sources d'activation de la fusion, par exemple un faisceau d'électrons, ou une combinaison de sources d'activation (e.g. deux lasers de puissance ou de longueur d'ondes différentes).

## Revendications

1. Un procédé mis en oeuvre par ordinateur pour inspecter la température au cours d'une fabrication additive de pièce par fusion sur lit de poudre dans un système de fabrication additive, la fusion étant obtenue par balayage d'une source d'activation sur le lit de poudre, le procédé comprenant les étapes suivantes opérées lors de la fabrication sur un plateau de construction, d'une couche 'n' d'au moins une pièce dans le lit de poudre :
- recevoir des signaux analogiques représentatifs d'un faisceau ultrasonore émis en mode émetteur-récepteur confondus par un traducteur piézoélectrique dans au moins un guide d'ondes ultrasonores solidaire du plateau de construction, ledit au moins un guide d'ondes étant fabriqué couche par couche simultanément à la fabrication de ladite au moins une pièce, et ayant une valeur minimale de la plus petite dimension de la section supérieure au rapport « c/f », « c » désignant la vitesse de propagation de l'onde ultrasonore dans le matériau contrôlé et « f » la fréquence principale de l'onde ultrasonore ;
- calculer, à partir des signaux analogiques reçus, un temps de vol pour ledit faisceau ultrasonore ;
- obtenir par simulation une valeur de la propagation d'un faisceau ultrasonore dans un champ de température, la simulation s'appuyant sur un modèle représentatif dudit système de fabrication additive pour ladite couche `n' ;
- comparer la valeur du temps de vol dans ledit au moins un guide d'ondes à la valeur de propagation obtenue par simulation;
- mettre à jour ou non le modèle de simulation selon le résultat de la comparaison ;
- répéter les étapes précédentes ; et
- générer une estimation du champ de température régnant dans ledit au moins un guide d'ondes à partir du résultat des comparaisons.

2. Le procédé selon la revendication 1 dans lequel le modèle de simulation est un modèle numérique comprenant au moins une description géométrique de la zone inspectée à la couche 'n', un modèle de comportement thermique et un modèle élastodynamique du comportement d'ondes élastiques au sein de la zone inspectée.

3. Le procédé selon la revendication 2 dans lequel la description géométrique de la zone inspectée comprend une description de l'ensemble des éléments traversés par le faisceau ultrasonore dont au moins une description dudit au moins un guide d'ondes et de ladite au moins une pièce en cours de fabrication.

4. Le procédé selon les revendications 2 ou 3 dans lequel le modèle élastodynamique comprend des équations dont la résolution est faite de manière semi-analytique.

5. Le procédé selon l'une quelconque des revendications 1 à 4 comprenant avant de répéter les étapes pour une couche donnée 'n', une étape pour déterminer si il y a eu un balayage par la source d'activation sur la couche 'n' dans la zone dudit au moins un guide d'ondes.

6. Le procédé selon la revendication 5 comprenant, si il y a eu un balayage par la source d'activation sur la couche 'n' dans la zone dudit au moins un guide d'ondes, une étape de mettre à jour dans le modèle de simulation la géométrie de la zone inspectée avec l'ajout d'une nouvelle couche `n+1'.

7. Le procédé selon la revendication 5 ou 6 comprenant, si il y a eu un balayage par la source d'activation sur la couche 'n', dans la zone dudit au moins un guide d'ondes une étape de mettre à jour dans le modèle thermique des paramètres de température en surface dudit au moins un guide d'ondes.

8. Le procédé selon l'une quelconque des revendications 1 à 7 dans lequel la mise à jour du modèle de simulation prend en compte la température en surface dudit au moins un guide d'ondes, ladite température étant obtenue par des moyens de mesure de température sans contact.

9. Le procédé selon l'une quelconque des revendications 1 à 8 dans lequel la mise à jour du modèle de simulation prend en compte la température du plateau de construction du système de fabrication, ladite température étant obtenue par des moyens de mesure de température non ultrasonores.

10. Le procédé selon l'une quelconque des revendications 1 à 9 comprenant avant les étapes de mesurer le temps de vol pour une couche 'n', une étape de déterminer que les signaux produits par le faisceau ultrasonore sont exploitables à ladite couche 'n' pour effectuer une mesure de temps de vol.

11. Le procédé selon la revendication 10 comprenant une étape d'initialisation du modèle de simulation consistant à initialiser le modèle à la couche 'n'.

12. Le procédé selon la revendication 11 dans lequel l'initialisation du modèle à la couche `n' consiste à initialiser la géométrie de la zone inspectée et les paramètres du champ de température.

13. Un dispositif pour inspecter la température au cours de la fabrication d'une pièce dans un système de fabrication additive de pièce par fusion sur lit de poudre, la fusion étant obtenue par balayage d'une source d'activation sur le lit de poudre, le dispositif comprenant un ordinateur et des moyens adaptés pour mettre en oeuvre les étapes du procédé selon l'une quelconque des revendications 1 à 12.

14. Le dispositif selon la revendication 13 comprenant au moins un guide d'ondes isolé de ladite au moins une pièce en cours de fabrication.

15. Le dispositif selon la revendication 13 comprenant au moins un guide d'ondes solidaire de ladite au moins une pièce en cours de fabrication.

16. Le dispositif selon l'une quelconque des revendications 13 à 15 comprenant des moyens sans contact de type pyromètre ou caméra thermique permettant de mesurer la température en surface dudit au moins un guide d'ondes.

17. Le dispositif selon l'une quelconque des revendications 13 à 16 comprenant des moyens non ultrasonores de type thermocouple permettant de mesurer la température du plateau de construction du système de fabrication.

18. Le dispositif selon l'une quelconque des revendications 13 à 17 comprenant au moins un traducteur piézoélectrique pour émettre un faisceau ultrasonore dans ledit au moins un guide d'ondes, ledit au moins un traducteur piézoélectrique étant relié à un système d'acquisition électronique apte à envoyer des pulses d'excitation vers ledit au moins un traducteur.

19. Le dispositif selon la revendication 18 dans lequel le système d'acquisition électronique est apte à numériser les signaux analogiques reçus dudit au moins un traducteur piézoélectrique pour générer une valeur de temps de vol ; à comparer la valeur de temps de vol avec une valeur de propagation d'un faisceau ultrasonore dans un champ de température obtenue par simulation, la simulation s'appuyant sur un modèle représentatif dudit système de fabrication additive ; à mettre à jour le modèle de simulation ; et à générer une estimation du champ de température régnant dans ledit au moins un guide d'ondes à partir du résultat des comparaisons.

20. Un système de fabrication additive de pièce par fusion sur lit de poudre, la fusion étant obtenue par balayage d'une source d'activation sur le lit de poudre, le système de fabrication additive comprenant un dispositif selon l'une quelconque des revendications 13 à 19.

## Patentansprüche

1. Computerimplementiertes Verfahren zum Überprüfen der Temperatur im Verlauf einer additiven Teileherstellung durch pulverbettbasiertes Schmelzen in einem additiven Herstellungssystem, wobei das Schmelzen durch Überstreichen des Pulverbetts mit einer Aktivierungsquelle erreicht wird, wobei das Verfahren die folgenden Schritte umfasst, die bei der Herstellung auf einer Bauplatte, einer Schicht "n" von mindestens einem Teil in dem Pulverbett durchgeführt werden:
- Empfangen von Analogsignalen, die für einen Ultraschallstrahl repräsentativ sind, der im kombinierten Sendeempfängermodus von einem piezoelektrischen Wandler in mindestens einem Ultraschallwellenleiter einstückig mit der Bauplatte ausgesendet wird, wobei der mindestens eine Wellenleiter Schicht für Schicht gleichzeitig mit der Herstellung des mindestens einen Teils hergestellt wird und einen Mindestwert der kleinsten Abmessung des oberen Abschnitts im Verhältnis "c/f' aufweist, wobei "c" die Ausbreitungsgeschwindigkeit der Ultraschallwelle in dem kontrollierten Material und "f" die Hauptfrequenz der Ultraschallwelle bezeichnet;
- Berechnen, anhand der empfangenen Analogsignale, einer Flugzeit für den Ultraschallstrahl;
- Erhalten, durch Simulation, eines Ausbreitungswertes eines Ultraschallstrahls in einem Temperaturfeld, wobei die Simulation auf einem für das additive Herstellungssystem für die Schicht "n" repräsentativen Modell basiert;
- Vergleichen des Wertes der Flugzeit in dem mindestens einen Wellenleiter mit dem durch Simulation erhaltenen Ausbreitungswert;
- Aktualisieren oder Nichtaktualisieren des Simulationsmodells gemäß dem Ergebnis des Vergleichs;
- Wiederholen der vorangehenden Schritte; und
- Generieren einer Schätzung des Temperaturfelds, das in dem mindestens einen Wellenleiter herrscht, anhand des Ergebnisses der Vergleiche.

2. Verfahren nach Anspruch 1, wobei das Simulationsmodell ein digitales Modell ist, das mindestens eine geometrische Beschreibung der untersuchten Zone in der Schicht "n", ein Temperaturverhaltensmodell und ein elastodynamisches Modell des Verhaltens von elastischen Wellen in der untersuchten Zone umfasst.

3. Verfahren nach Anspruch 2, wobei die geometrische Beschreibung der untersuchten Zone eine Beschreibung des Satzes der von dem Ultraschallstrahl durchquerten Elemente umfasst, davon mindestens eine Beschreibung des mindestens einen Wellenleiters und des mindestens einen Teils im Verlauf der Herstellung.

4. Verfahren nach Anspruch 2 oder 3, wobei das elastodynamische Modell Gleichungen umfasst, deren Lösung semi-analytisch erfolgt.

5. Verfahren nach einem der Ansprüche 1 bis 4, umfassend, vor dem Wiederholen der Schritte für eine gegebene Schicht "n", einen Schritt zum Bestimmen, ob es ein Überstreichen durch die Aktivierungsquelle auf der Schicht "n" in der Zone des mindestens einen Wellenleiters gab.

6. Verfahren nach Anspruch 5, umfassend, wenn es ein Überstreichen durch die Aktivierungsquelle auf der Schicht "n" in der Zone des mindestens einen Wellenleiters gab, einen Schritt des Aktualisierens, in dem Simulationsmodell, der Geometrie der untersuchten Zone unter Hinzufügung einer neuen Schicht "n+1".

7. Verfahren nach Anspruch 5 oder 6, umfassend, wenn es ein Überstreichen durch die Aktivierungsquelle auf der Schicht "n" in der Zone des mindestens einen Wellenleiters gab, einen Schritt des Aktualisierens, in dem Wärmemodell, von Oberflächentemperaturparametern des mindestens einen Wellenleiters.

8. Verfahren nach einem der Ansprüche 1 bis 7, wobei die Aktualisierung des Simulationsmodells die Oberflächentemperatur des mindestens einen Wellenleiters berücksichtigt, wobei die Temperatur durch kontaktlose Temperaturmessmittel erhalten wird.

9. Verfahren nach einem der Ansprüche 1 bis 8, wobei die Aktualisierung des Simulationsmodells die Temperatur der Bauplatte des Herstellungssystems berücksichtigt, wobei die Temperatur durch nicht auf Ultraschall basierende Temperaturmessmittel erhalten wird.

10. Verfahren nach einem der Ansprüche 1 bis 9, umfassend, vor den Schritten des Messens der Flugzeit für eine Schicht "n", einen Schritt des Bestimmens, dass die von dem Ultraschallstrahl erzeugten Signale an der Schicht "n" verwertbar sind, um eine Flugzeitmessung vorzunehmen.

11. Verfahren nach Anspruch 10, umfassend einen Schritt des Initialisierens des Simulationsmodells, bestehend im Initialisieren des Modells an der Schicht "n".

12. Verfahren nach Anspruch 11, wobei die Initialisierung des Modells an der Schicht "n" im Initialisieren der Geometrie der untersuchten Zone und der Parameter des Temperaturfelds besteht.

13. Vorrichtung zum Untersuchen der Temperatur im Verlauf der Herstellung eines Teils in einem additiven Teileherstellungssystem durch pulverbasiertes Schmelzen, wobei das Schmelzen durch Überstreichen des Pulverbetts mit einer Aktivierungsquelle erreicht wird, wobei die Vorrichtung einen Computer und Mittel umfasst, die zum Implementieren der Schritte des Verfahrens nach einem der Ansprüche 1 bis 12 geeignet sind.

14. Vorrichtung nach Anspruch 13, umfassend mindestens einen Wellenleiter, der von dem mindestens einen Teil im Verlauf der Herstellung isoliert ist.

15. Vorrichtung nach Anspruch 13, umfassend mindestens einen Wellenleiter, der mit dem mindestens einen Teil im Verlauf der Herstellung einstückig ist.

16. Vorrichtung nach einem der Ansprüche 13 bis 15, umfassend kontaktlose Mittel vom Pyrometer- oder Wärmebildkameratyp, die es ermöglichen, die Oberflächentemperatur des mindestens einen Wellenleiters zu messen.

17. Vorrichtung nach einem der Ansprüche 13 bis 16, umfassend nicht auf Ultraschall basierende Mittel vom Thermoelementtyp, die es ermöglichen, die Temperatur der Bauplatte des Herstellungssystems zu messen.

18. Vorrichtung nach einem der Ansprüche 13 bis 17, umfassend mindestens einen piezoelektrischen Wandler zum Aussenden eines Ultraschallstrahls in dem mindestens einen Wellenleiter, wobei der mindestens eine piezoelektrische Wandler mit einem elektronischen Erfassungssystem verbunden ist, das in der Lage ist, Erregungsstöße zu dem mindestens einen Wandler zu schicken.

19. Vorrichtung nach Anspruch 18, wobei das elektronische Erfassungssystem in der Lage ist, die von dem mindestens einen piezoelektrischen Wandler empfangenen Analogsignale zu digitalisieren, um einen Flugzeitwert zu generieren; den Flugzeitwert mit einem Ausbreitungswert eines Ultraschallstrahls in einem durch Simulation erhaltenen Temperaturfeld zu vergleichen, wobei die Simulation auf einem für das additive Herstellungssystem repräsentativen Modell basiert; das Simulationsmodell zu aktualisieren und eine Schätzung des Temperaturfelds, das in dem mindestens einen Wellenleiter herrscht, anhand des Ergebnisses der Vergleiche zu generieren.

20. Additives Teileherstellungssystem durch pulverbettbasiertes Schmelzen, wobei das Schmelzen durch Überstreichen des Pulverbetts mit einer Aktivierungsquelle erreicht wird, wobei das additive Herstellungssystem eine Vorrichtung nach einem der Ansprüche 13 bis 19 umfasst.

## Claims

1. A method implemented by a computer for inspecting the temperature during additive manufacturing of a component by melting on a powder bed in an additive manufacturing system, the melting being obtained by means of scanning an activation source on the powder bed, the method comprising the following steps which are carried out during the production on a construction plate of a layer "n" of at least one component in the powder bed:
- receiving analogue signals which are representative of an ultrasound beam transmitted in transmitter/receiver mode and which are mixed by a piezoelectric translator in at least one ultrasound waveguide which is fixedly joined to the construction plate, the at least one waveguide being produced layer by layer at the same time as the at least one component is produced, and having a minimum value of the smallest dimension of the cross section which is greater than the ratio "c/f", "c" designating the speed of propagation of the ultrasound wave in the inspected material and "f" designating the main frequency of the ultrasound wave;
- calculating, from the analogue signals received, a flight time for the ultrasound beam;
- obtaining by means of simulation a value of the propagation of an ultrasound beam in a temperature range, the simulation being based on a model which is representative of the additive manufacturing system for the layer "n";
- comparing the value of the flight time in the at least one waveguide with the propagation value obtained by means of simulation;
- updating or not updating the simulation model in accordance with the result of the comparison;
- repeating the preceding steps; and
- generating an estimate of the temperature range present in the at least one waveguide from the result of the comparisons.

2. The method according to claim 1, wherein the simulation model is a digital model comprising at least one geometric description of the zone inspected on the layer "n", a thermal behaviour model and an elastodynamic model of the behaviour of resilient waves within the inspected zone.

3. The method according to claim 2, wherein the geometric description of the inspected zone comprises a description of all the elements through which the ultrasound beam passes, including at least one description of the at least one waveguide and the at least one component during production.

4. The method according to claim 2 or 3, wherein the elastodynamic model comprises equations whose resolution is carried out in a semi-analytical manner.

5. The method according to any one of claims 1 to 4, comprising, before repeating the steps for a given layer "n", a step for determining whether there has been a scanning by the activation source on the layer "n" in the zone of the at least one waveguide.

6. The method according to claim 5, comprising, if there was a scanning by the activation source on the layer "n" in the zone of the at least one waveguide, a step of updating in the simulation model the geometry of the zone inspected with the addition of a new layer "n+1".

7. The method according to claim 5 or 6, comprising, if a scanning has taken place by the activation source on the layer "n" in the zone of the at least one waveguide, a step of updating in the thermal model surface temperature parameters of the at least one waveguide.

8. The method according to any one of claims 1 to 7, wherein the updating of the simulation model takes into account the surface temperature of the at least one waveguide, the temperature being obtained by contactless temperature measurement means.

9. The method according to any one of claims 1 to 8, wherein the updating of the simulation model takes into account the temperature of the construction plate of the production system, the temperature being obtained by non-ultrasound temperature measurement means.

10. The method according to any one of claims 1 to 9, comprising, prior to the steps of measuring the flight time for a layer "n", a step of determining that the signals produced by the ultrasound beam can be used on the layer "n" in order to carry out a flight time measurement.

11. The method according to claim 10, comprising a step of initialising the simulation model consisting of initialising the model on the layer "n".

12. The method according to claim 11, wherein the initialisation of the model on the layer "n" consists of initialising the geometry of the inspected zone and the parameters of the temperature range.

13. A device for inspecting the temperature during the production of a component in an additive manufacturing system for a component by melting on the powder bed, the melting being obtained by means of scanning an activation source on the powder bed, the device comprising a computer, and means which are suitable for implementing the steps of the method according to any one of claims 1 to 12.

14. The device according to claim 13, comprising at least one waveguide which is insulated from the at least one component during production.

15. The device according to claim 13, comprising at least one waveguide which is fixedly joined to the at least one component during production.

16. The device according to any one of claims 13 to 15, comprising contactless means of the pyrometer or thermal camera type which enables the surface temperature of the at least one waveguide to be measured.

17. The device according to any one of claims 13 to 16, comprising non-ultrasound means of the thermocouple type which enable the temperature of the construction plate of the production system to be measured.

18. The device according to any one of claims 13 to 17, comprising at least one piezoelectric translator for transmitting an ultrasound beam in the at least one waveguide, the at least one piezoelectric translator being connected to an electronic acquisition system which is capable of sending excitation pulses to the at least one translator.

19. The device according to claim 18, wherein the electronic acquisition system is capable of digitising the analogue signals received from the at least one piezoelectric translator in order to generate a flight time value; comparing the flight time value with a propagation value of an ultrasound beam in a temperature range obtained by means of simulation, the simulation being based on a model which is representative of the additive manufacturing system; updating the simulation model; and generating an estimate of the temperature range present in the at least one waveguide from the result of the comparisons.

20. An additive manufacturing system for a component by melting on the powder bed, the melting being obtained by means of scanning an activation source on the powder bed, the additive manufacturing system comprising a device according to any one of claims 13 to 19.
